# EUROPÄISCHE PATENTSCHRIFT

(11) **EP 0 573 845 B1**
(45) Veröffentlichungstag und Bekanntmachung des Hinweises auf die Patenterteilung: **12.03.1997**
(21) Anmeldenummer: 93108532.8
(22) Anmeldetag: 26.05.1993
(51) Int. Cl.: G05B 13/02, G06F 9/44, G06F 7/60

(54) **Fuzzy logic Controller mit hoher Verarbeitungsgeschwindigkeit**
Fuzzy logic controller with a high processing speed
Contrôleur en logique floue à haute vitesse de traitement

(30) Priorität: 12.06.1992 DE 4219348
(43) Veröffentlichungstag der Anmeldung: 15.12.1993
(73) Patentinhaber: SIEMENS AKTIENGESELLSCHAFT, 80333 München (DE)
(72) Erfinder: Eichfeld, Herbert, W-8000 München 22 (DE); Künemund, Thomas, Dr., W-8000 München 2 (DE)

(56) Entgegenhaltungen:
- EP-A- 0 173 383
- EP-A- 0 445 797
- EP-A- 0 452 824
- IEEE INT. CONF. ON FUZZY SYSTEMS 8. März 1992 , NEW YORK, IEEE, US Seiten 1317 - 1323 HERBERT EICHFELD ET AL. 'Architecture of a CMOS fuzzy logic controller with optimized memory organisation and operator design'
- IEEE EXPERT Bd. 5, Nr. 1 , Februar 1990 , NEW YORK US Seiten 31 - 45 XP171403 MENG-HIOT LIM ET AL. 'Implementing fuzzy rule-based systems on silicon chips'

## Beschreibung

Ein Fuzzy Logic Controller mit optimierter Speicherorganisation ist beispielsweise in der Patentanmeldung WO-A-93/05471 wiedergegeben und stellt einen Stand der Technik im Sinne von EPÜ Art. 54 (3) dar oder aus der Veröffentlichung IEEE Int. Conf. on Fuzzy Systems, 3/1992, New York, US, Seiten 1317-1323 bekannt. Dabei handelt es sich um einen Fuzzy Logic Controller, der aufgrund seiner Logik eine optimierte Speicherorganisation gestattet, wodurch aufgrund des geringen Speicherbedarfs die benötigten Speicher problemlos auf dem Halbleiterchip des Fuzzy Logic Controllers realisierbar sind.

Aus der Veröffentlichung IEEE EXPERT, Bd. 5, Nr. 1, 2/90, N. Y., US, S. 31 - 45; M. H. Lim, Implementing Fuzzy Rule-based Systems on silicon chips, sind verschiedene Realisierungen von Fuzzy-Operatoren bekannt.

Ferner ist aus der europäischen Patentanmeldung 0 445 797 A2 ein Fuzzy Logic Computer bekannt, bei dem eine Fuzzifikation, eine Regelauswertung, eine Inferenzbildung und eine Defuzzifikation erfolgt.

Der Erfindung liegt nun die Aufgabe zugrunde, einen Fuzzy Logic Controller anzugeben, der bei möglichst geringer Chipfläche eine möglichst hohe Verarbeitungsgeschwindigkeit gestattet und der eine möglichst hohe Flexibilität in der Architektur, im Regelformat und in der Algorithmenwahl besitzt. Diese Aufgabe wird erfindungsgemäß durch die im Patentanspruch 1 angegebenen Merkmale gelöst.

Der mit der Erfindung erzielbare Vorteil liegt insbesondere darin, daß der Fuzzy Logic Controller aufgrund seines geringen Chipflächenbedarfs nicht nur selbständig auf einem eigenen Chip sondern auch als Teil eines konventionellen Mikrocontrollers realisierbar ist.

Die Ansprüche 2 bis 9 sind auf bevorzugte Ausbildungen des Fuzzy Logic Controllers gerichtet.

Die Erfindung wird nachfolgend anhand der Zeichnungen näher erläutert. Dabei zeigt
- Figur 1: ein Blockschaltbild eines erfindungsgemäßen Fuzzy Logic Controllers für eine Ausgangsvariable,
- Figur 2: ein Detailschaltbild der Fuzzifikationsschaltung von Figur 1,
- Figur 3: ein Detailschaltbild der Regelauswertungsschaltung von Figur 1,
- Figur 4: ein Detailschaltbild der Inferenzschaltung von Figur 1,
- Figur 5: ein Detailschaltbild der Defuzzifikationsschaltung von Figur 1,
- Figur 6: ein Detailschaltbild der Ablaufsteuerung von Figur 1,
- Figur 7: ein Detailschaltbild der Defuzzifikationsschaltung nach Figur 5,
- Figur 8: ein weiteres Detailschaltbild zur Defuzzifikationsschaltung nach Figur 5,
- Figur 9: ein Detailschaltbild eines Dividierers der Defuzzifikationsschaltung nach Figur 5 und
- Figur 10: ein Detailschaltbild einer Ablaufsteuerung des Dividierers nach Figur 9.

Das Grundprinzip eines digitalen Fuzzy Logic Controllers basiert darauf, daß scharfe Eingangswerte für n_{E} Eingangsvariable jeweils mit der Auflösung von a_{E} Bit dem Fuzzy Logic Controller zugeführt werden, daß anschließend eine Abbildung der scharfen Eingangswerte auf linguistische Werte der jeweiligen Eingangsvariablen erfolgt, wobei jede Eingangsvariable n_{LW} = 2^{a}LW linguistische Werte besitzt, die aufgrund der unscharfen Zuordnung (Fuzzy Logic) überlappende Zugehörigkeitsfunktionen mit einem maximalen Überlappungsgrad u größer gleich 2 und kleiner gleich n_{LW} aufweisen, daß mit Hilfe eines linguistischen Protokolls bzw. Regelsatzes in Form von WENN-DANN-Regeln zwischen den linguistischen Werten der Eingangsvariablen und den linguistischen Werten der Ausgangsvariablen Bezeichnungen herstellbar sind, wobei ein WENN-Teil aus einer Kombination von Einzelbedingungen für die Eingangsvariablen gebildet ist und wobei ein linguistischer Wert einer Ausgangsvariablen in einer Regel als Folge (DANN-Teil) auftritt, daß eine unscharfe Verknüpfung der in einer jeweiligen Regel vorkommenden Eingangs-und Ausgangsvariablen über die Zugehörigkeitsfunktionen der linguistischen Werte der Ausgangsvariablen erfolgt, wobei sowohl die Zugehörigkeitsfunktionen der linguistischen Werte der Eingangsvariablen als auch die Zugehörigkeitsfunktionen der linguistischen Werte der Ausgangsvariablen beispielsweise eine Auflösung von a_{ZF} Bit besitzen, daß durch eine sogenannte Inferenz aus den Ergebnissen der unscharfen Verknüpfungen eine unscharfe Vereinigungsmenge gebildet wird und daß durch eine sogenannte Defuzzikation aus der unscharfen Vereinigungsmenge ein scharfer Ausgangswert mit der Auflösung a_{A} Bit erzeugt wird.

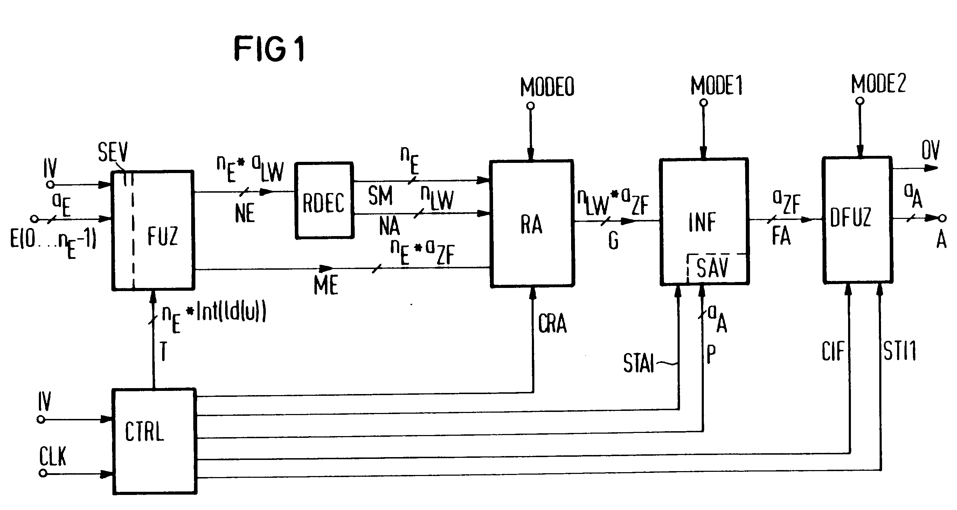

In Figur 1 ist ein Blockschaltbild eines erfindungsgemäßen Fuzzy Logic Controllers (FLC) dargestellt, der aus einer Fuzzifikationsschaltung FUZ mit einem Speicher SEV für die Eingangsvariablen, einen Regeldekoder RDEC, eine Regelauswertungsschaltung RA, eine Inferenzschaltung INF, eine Defuzzifikationsschaltung DFUZ und eine Steuereinheit CTRL besitzt. Dem Speicher SEV der Fuzzifikationsschaltung FUZ sind dabei n_{E} scharfe Eingangswerte E (O ... n_{E}-1) mit der Auflösung a_{E} und ein Signal IV (input valid) zur Bestätigung gültiger Eingangsdaten extern zuführbar. Ferner sind der Fuzzifikationsschaltung FUZ n_{E} ∗ Int (ld (u)) Bit breite, wobei Int (x) hier und im Folgenden die kleinste natürliche Zahl größer gleich x bedeutet, aus der Steuereinheit CTRL kommende Fuzzifikationssteuersignale T zuführbar, n_{E} Nummern NE der Zugehörigkeitsfunktionen der linguistischen Werte der Eingangsvariablen jeweils mit der Auflösung a_{LW} bildbar und dem Regeldekoder RDEC zuführbar sowie n_{E} Werte ME der Zugehörigkeitsfunktionen der linguistischen Werte der Eingangsvariablen mit der Auflösung a_{ZF} erzeugbar und der Regelauswerteschaltung RA zuführbar. Der Regeldekoder RDEC bildet Signale SM zur Meldung der von einer ausgewählten Regel betroffenen Eingangsvariablen, wobei vorteilhafterweise pro Eingangsvariable ein Signal, also insgesamt n_{E} bitsignifikante Signale SM vorliegen, und Nummern NA der linguistischen Werte der Ausgangsvariablen, wobei vorteilhafterweise für jeden linguistischen Wert ein Signal, also insgesamt n_{LW} bitsignifikante Signale vorgesehen sind. Die Signale SM und die Signale NA werden den Eingängen der Regelauswerteschaltung RA zugeleitet. Mit Hilfe eines Regelauswertungstaktsignals CRA aus der Steuereinheit CTRL und in Abhängigkeit eines extern zuführbaren Verknüpfungsauswahlsignals MODE O sind in der Regelauswerteschaltung RA für die n_{LW} linguistischen Werte der Ausgangsvariablen Gewichtungssignale G jeweils mit der Auflösung a_{ZF} der Zugehörigkeitsfunktionen der Eingangsvariablen erzeugbar und der Inferenzschaltung INF zuführbar. Der Speicher SAV der Inferenzschaltung INF ist durch ein a_{A} Bit breites Adressierungssignal P aus der Steuerschaltung CTRL adressierbar, wobei a_{A} die Auflösung des scharfen Ausgangswertes A darstellt. In der Inferenzschaltung ist ausgelöst von einem Inferenzstartsignal STAI und in Abhängigkeit eines extern zuführbaren Inferenzauswahlsignals MODE1 eine unscharfe Vereinigungsmenge FA mit der Auflösung a_{ZF} der Zugehörigkeitsfunktionen der linguistischen Werte der Ausgangsvariablen bildbar und der Defuzzifikationsschaltung DFUZ zuführbar. Mit Hilfe eines Inferenztaktsignals CIF und eines Inferenzstopsignals STI1 aus der Steuereinheit CTRL wird in der Defuzzifikationsschaltung DFUZ aus der Vereinigungsmenge FA in Abhängigkeit eines extern zuführbaren Defuzzifikationsauswahlsignals MODE2 ein scharfes Ausgangssignal A mit der Auflösung a_{A} Bit und ein Signal OV zur Bestätigung eines gültigen Ausgangssignals (output valid) erzeugt. Die Ablaufsteuerung CTRL ist durch ein Taktsignal CLK, das beispielsweise extern zuführbar ist, und das Signal IV zur Bestätigung gültiger Eingangsdaten versorgbar bzw. ansteuerbar.

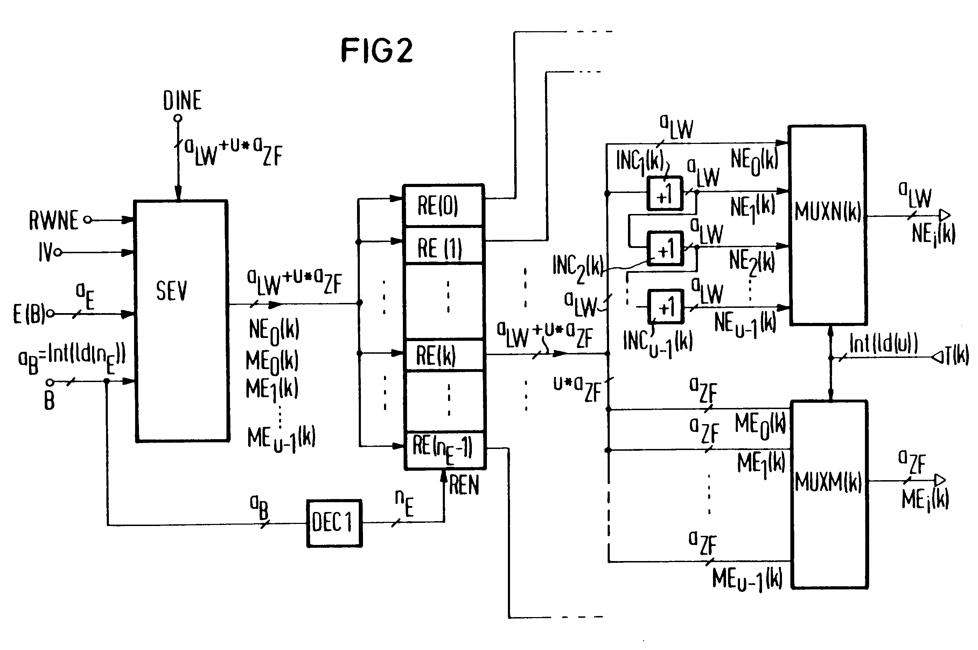

Die in Figur 1 gezeigte Fuzzifikationsschaltung FUZ ist beispielsweise entsprechend Figur 2 aufgebaut und besitzt den Speicher SEV für die Eingangsvariablen, einen Auswahldekoder DEC1, eine aus den Registern RE (O) ... RE (n_{E}-1) bestehende Registerbank sowie, beispielhaft für eine k-te Eingangsvariable dargestellt, einen k-ten Nummernmultiplexer MUXN (k), einen k-ten Wertemultiplexer MUXM (k) und u - 1 k-te Inkrementierer INC₁ (k) ... INCᵤ₋₁ (k). Scharfe Eingangswerte E (B) mit der Auflösung a_{E} sind dem Speicher SEV als Adreßsignale neben Blockauswahlsignalen B mit der Auflösung a_{B} = Int (ld (n_{E})) zuführbar, wobei die scharfen Eingangswerte E (B) für jede Eingangsvariable zeitlich seriell anliegen und für jede Eingangsvariable ein eigener Speicherblock B vorgesehen ist. Der Speicher SEV kann als Festwertspeicher (beispielsweise ROM) oder aber als Schreib/Lesespeicher (beispielsweise RAM) ausgeführt sein und besitzt die Kapazität K_{E} = n_{E} ∗ 2^{a}E ∗ (a_{LW} + u ∗ a_{ZF}) und ist so organisiert, daß jeweils a_{LW} + u ∗ a_{ZF} Bit parallel auslesbar bzw. im Falle eines Schreib-Lesespeichers über Dateneingänge DINE beschreibbar sind. Ferner wird dem Speicher SEV neben dem Signal IV (input valid) ein extern zuführbares Schreib/Lese-Auswahlsignal RWNE zur Verfügung gestellt, sofern es sich beim Speicher SEV um einen Schreib/Lesespeicher handelt. Einen bestimmten scharfen Wert E (B) einer k-ten Eingangsvariablen wird mit Hilfe des Speichers SEV eine niedrigste Nummer NE_{O} (k) aller u - 1 möglichen Nummern NEᵢ (k) der jeweils betroffenen linguistischen Werte der Eingangsvariablen und Werte ME_{O} (k) ... MEᵤ₋₁ (k) der Zugehörigkeitsfunktionen der maximal u gleichzeitig betroffenen linguistischen Werte der Eingangsvariablen am Ausgang des Speichers SEV zugeordnet und den n_{E} Registern der Registerbank zugeführt. Das a_{B} = Int (ld(n_{E})) Bit breite Blockauswahlsignal B ist über den Auswahldekoder DEC1 auf n_{E} Aktivierungseingänge REN der Register RE (O) ... RE (n_{E}-1) geführt, wodurch erreichbar ist, daß für alle Eingangsvariablen die zugehörigen Blöcke des Speichers SEV in die entsprechenden Register der Registerbank gespeichert werden, so daß sie gleichzeitig parallel für die Nummern und Wertemultiplexer zur Verfügung stehen. Die beispielsweise in dem Register RE (k) gespeicherten Werte ME_{O} (k) ... MEᵤ₋₁ (k) werden dabei beispielsweise dem Wertemultiplexer MUXM (k) zugeführt und mit Hilfe der Inkrementierer INC₁ (k) ... INCᵤ₋₁ (k) werden stufenweise aus der niedrigsten Nummer NE_{O} (k) die Nummern NE_{O} (k) ... NEᵤ₋₁ (k) erzeugt und dem Nummernmultiplexer MUXN (k) zugeführt. Die Inkrementierer besitzen eine Breite von a_{LW} Bit und sind so beschaffen, daß an ihrem Ausgang das um eins erhöhte Eingangssignal anliegt, sofern das Eingangssignal kleiner als 2^{a}LW-1 beträgt und an ihrem Ausgang Null anliegt, sofern das Eingangssignal gleich 2^{a}LW-1 beträgt. Durch das k-te Fuzzifikationssteuersignal T (k) mit der Bitbreite Int (ld (u)) ist eine der maximal u Nummern NEᵢ (A) der linguistischen Werte der k-ten Eingangsvariablen zusammen mit dem betreffenden Wert der Zugehörigkeitsfunktion des linguistischen Wertes mit der Nummer NEᵢ (k) der k-ten Eingangsvariablen auswählbar. Auch den anderen Registern der Registerbank sind Nummernmultiplexer und kertemultiplexer entsprechend nachgeschaltet, die ebenfalls durch Fuzzifikationssteuersignale aus der Ablaufsteuerung CTRL angesteuert werden, wobei die Fuzzifikationssteuersignale T insgesamt n_{E} ∗ Int (ld (u)) Bit breit sind und so geartet sind, daß sich alle uⁿE möglichen Kombinationen der Nummern NEᵢ (k) und zugehörigen Werte MEᵢ (k) mit i = 0,1, ..., u - 1 und k = 0,1, ..., n_{E-1} gebildet werden und zum Regeldekoder RDEC bzw. zur Regelauswertungsschaltung RA durchschaltbar sind.

Der Regeldekoder RDEC beinhaltet das linguistische Protokoll bzw. den Regelsatz des erfindungsgemäßen Fuzzy Logic Controllers. Eine Regel besitzt dabei folgende Gestalt:

WENN eine erste Eingangsvariable einen bestimmten linguistischen Wert der ersten Eingangsvariablen und eine zweite Eingangsvariable einen bestimmten linguistischen Wert der zweiten Eingangsvariablen und ... eine L-te Eingangsvariable einen linguistischen Wert der L-ten Eingangsvariablen besitzt, DANN erhält die Ausgangsvariable einen bestimmten linguistischen Wert der Ausgangsvariablen.

Es müssen dabei nicht immer alle Eingangsvariablen kombinatorisch verknüpft sein, das heißt also, L kann auch kleiner als n_{E} sein. Da maximal n_{E} Eingangsvariablen in der Bedingung einer Regel kombinatorisch verknüpft sind und jede Eingangsvariable n_{LW} = 2^{a}LW linguistische Werte aufweist besitzt der Regeldekoder RDEC n_{E} ∗ a_{LW} Eingänge. Hiermit werden maximal 2ⁿE ∗ ^{a}LW Kombinationen und damit Regeln möglich, dies bedeutet jedoch bei einem realistischen Fall von a_{LW} = 3 und n_{E} = 8 die Gesamtzahl von 2²⁴ = 16 M möglichen Regeln. In der Praxis jedoch werden nur maximal etwa 100 Regeln benötigt. Der Regeldekoder ist deshalb nicht als Speicher für alle möglichen Regeln ausgeführt, sondern als programmierbare Logikschaltung mit üblicher Architektur, beispielsweise als PLA oder FPGA. In uⁿE von der Ablaufsteuerung CTRL erzeugten Taktzyklen werden nacheinander alle Kombinationen von Nummern NEᵢ (O ... n_{E}-1) der Zugehörigkeitsfunktionen der Eingangsvariablen an die Eingänge des Regeldekoders gelegt. Falls jeweils eine vorliegende Kombination der Nummern NEᵢ (O ... n_{E}-1) die Bedingung einer der Regeln erfüllt, erscheint eine logische 1 an demjenigen der n_{LW} = 2^{a}LW Ausgänge für die n_{LW} Nummern für die linguistischen Werte der Ausgangsvariablen, dessen linguistischer Wert als Folge der Regel auftritt. Da die Anzahl der in einer Regel miteinander kombinierten Eingangsvariablen im allgemeinen kleiner gleich n_{E} ist, liefert der Regeldekoder RDEC n_{E} in der dargestellten Ausbildung der Erfindung Auswahlsignale SM zur Festlegung der von einer jeweiligen Regel betroffenen Eingangsvariablen, wobei für jede der Eingangsvariablen ein Statusbit vorgesehen ist, das beispielsweise eine logische 1 erhält, sofern die betreffende Eingangsvariable in der Regel vorkommt. Bei der Formulierung der Regeln ist darauf zu achten, daß das linguistische Protokoll in dem Sinne vollständig ist, daß alle Kombinationen von scharfen Eingangswerten E der n_{E} Eingangsvariablen von Regeln erfaßt sind und jeweils einen linguistischen Wert der Ausgangsvariable ergeben. Die oben definierte Vollständigkeit des Regelsatzes läßt sich auch mit relativ wenigen Regeln erfüllen, da beispielsweise differenzierte Regelbedingungen nur in der Nähe der Sollwerte von Parametern des zu regelnden Systems notwendig sind bzw. bei großen Abweichungen nur der Extremwert einer einzigen lingustischen Variablen eine Rolle spielt und da außerdem die Möglichkeit besteht, daß bestimmte Kombinationen linguistischer Werte der Eingangsvariablen aus physikalischen Gründen gar nicht vorkommen können.

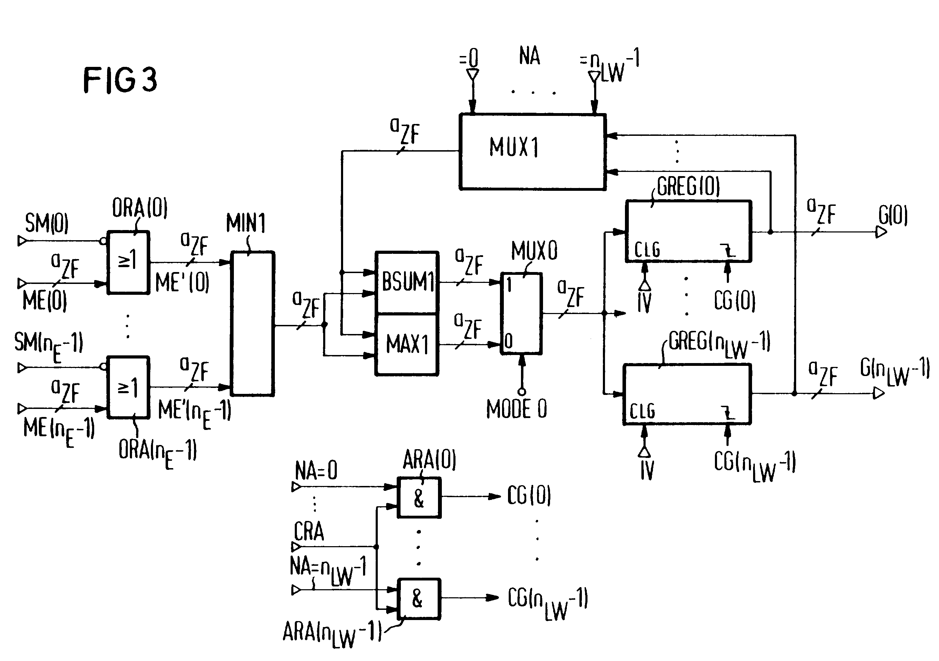

Eine erfindungsgemäße Regelauswertungsschaltung RA zur Berechnung der n_{LW} jeweils a_{ZF} Bit breiten Gewichtungssignale G ist in Figur 3 gezeigt. Die erfindungsgemäße Regelauswertungsschaltung RA besteht aus n_{E} ODER-Schaltungen ORA (O) ... ORA (n_{E}-1), einer Minimumschaltung MIN1, einer Schaltung BSUM1 zur Bildung einer begrenzten Summe, eine Maximumschaltung MAX1, einem 1 aus 2-Multiplexer MUXO, einem a_{z} 1 aus n_{LW}-Multiplexer MUX1, n_{LW} Gewichtsregistern GREG (O) ... GREG (n_{LW}-1) und n_{LW} UND-Gatter ARA (O) ... ARA (n_{LW}-1). Den ODER-Schaltungen ORA (O) ... ORA sind (n_{E}-1) mehrere Signale SM(o) ... SM (n_{E}-1) zur Auswahl der in einer Regel vorkommenden Eingangsvariablen mit den Werten ME (O) ... ME (n_{E}-1) der Zugehörigkeitsfunktionen der jeweiligen Eingangsvariablen verknüpft, wobei die Auswahlsignale SM den ODER-Schaltungen in invertierter Form zugeführt werden. Eine ODER-Schaltung, beispielsweise die ODER-Schaltung ORA (O), besteht beispielsweise aus a_{ZF} Zweifach-ODER-Gattern und ist so beschaltet, daß alle Bits des Ausgangssignals ME' (O) der ODER-Schaltung ORA (O) eine logische 1 erhalten, wenn das signifikante Bit SM (O) für die erste Eingangsvariable gleich O ist, also die erste Eingangsvariable in der aktuellen Regel nicht vorkommt; im Falle SM = 1 ist das Ausgangssignal ME' (O) den Werten ME (O) der Zugehörigkeitsfunktion der ersten Eingangsvariablen gleich. Entsprechendes gilt auch für die weiteren ODER-Schaltungen ORA (1) ... ORA (n_{E}-1). Die Ausgangssignale ME' (O) ... ME' (n_{E}-1) werden in der Minimumschaltung MIN1 miteinander verknüpft. Wird auf ein variables Regelformat verzichtet, so werden die Signale SM und die ODER-Schaltungen ORA (O) ... ORA (n_{E}-1) nicht benötigt, da die Werte der Zugehörigkeitsfunktionen der linguistischen Werte der von allen Regeln betroffenen Eingangsvariablen direkt in der Minimumschaltung MIN1 verknüpfbar sind. Die Bildung des Minimums entspricht einer unscharfen UND-Verknüpfung der Einzelbedingungen im Bedingungsteil (WENN-Teil) einer Regel des linguistischen Protokolls. Kommt hierbei eine Eingangsvariable in der betreffenden Regel nicht vor, so wird das Ausgangssignal der jeweiligen ODER-Verknüpfung den Maximalwert aufweisen und durch die Minimumschaltung MIN1 nicht berücksichtigt werden. Das Ausgangssignal der Minimumschaltung MIN1 wird gleichzeitig sowohl der Schaltung BSUM1 zur Bildung einer begrenzten Summe als auch der Maximumschaltung MAX1 zugeführt und der a_{ZF} Bit breite Ausgang der Schaltung BSUM1 ist mit einem ersten Eingang des Multiplexers MAX1 und der a_{ZF} Bit breite Ausgang der Maximumschaltung MUXO ist mit einem weiteren Eingang des Multiplexers MUXO verbunden. Ist das extern zuführbare Verknüpfungsauswahlsignal MODEO gleich O, so wird das Ausgangssignal der Maximumschaltung MAX1 den Eingängen der Gewichtungsregister GREG (O) ... GREG (n_{LW}-1) aufgeschaltet und im anderen Fall, wenn das Verknüpfungsauswahlsignal MODEO gleich 1 ist, wird das Ausgangssignal der Schaltung BSUM1 auf die Eingänge der Gewichtungsregister geschaltet. Die Schaltung BSUM1 erzeugt an ihrem Ausgang die Summe zweier Eingangssignale, sofern sie mit a_{ZF} Bit darstellbar ist, und nimmt den mit a_{ZF} Bit maximal darstellbaren Wert an, sofern ein Überlauf auftreten würde. Die Gewichtungsregister GREG (O) ... GREG (n_{LW}-1) sind jeweils a_{ZF} Bit breit, besitzen Löscheingänge CLG, die infolge einer positiven Flanke des Signals IV eine Löschung des jeweiligen Gewichtungsregisters bewirken, und Takteingänge CG (O) ... CG (n_{LW}-1), die ausgelöst von einer negativen Flanke die Eingangssignale der Gewichtungsregister speichern und an deren Ausgänge als jeweils a_{ZF} Bit breite Gewichtungssignale G (O) ... G (n_{LW}-1) zur Verfügung stellen. Aus einem in der Ablaufsteuerung CTRL gebildeten Takt CRA für die Regelauswertung werden mit Hilfe der UND-Schaltungen ARA (O) ... ARA (n_{LW}-1) Taktsignale CG (O) ... CG (n_{LW}-1) für die Gewichtungsregister auf eine Weise gebildet, daß das Signal für die Nummer des ersten linguistischen Wertes der Ausgangsvariablen (NA = 0) mit dem Taktsignal CRA zum Taktsignal CG (O) und alle weiteren Signale bis zur Nummer NA = n_{LW}-1 entsprechend verknüpft sind. Durch den Multiplexer MUX1 sind abhängig von der jeweiligen Nummer NA des linguistischen Wertes der Ausgangsvariablen die entsprechenden a_{ZF} Bit breiten Ausgänge der Gewichtungsregister sowohl auf den zweiten Eingang der Schaltung BSUM1 zur Bildung einer begrenzten Summe und auf den zweiten Eingang der Maximumschaltung MAX1 durchschaltbar. Da im allgemeinen mehrere Regeln einen gleichen linguistischen Wert der Ausgangsvariablen besitzen, müssen die zugehörigen Bedingungsteile der Regeln, also das Ausgangssignal der Minimumschaltung MIN1, durch eine unscharfe ODER-Schaltung verknüpft werden. Als unscharfe ODER-Schaltung kann hierbei erfindungsgemäß abhängig vom Verknüpfungsauswahlsignal MODEO die Maximumschaltung MAX1 oder die Schaltung BSUM1 zur Bildung einer begrenzten Summe alternativ verwendet werden. Die Gewichtungssignale G (O) ... G (n_{LW}-1) stellen praktisch die jeweiligen Begrenzungsniveaus für die Zugehörigkeitsfunktionen der linguistischen Werte der Ausgangsvariablen dar. Wesentlich für die hohe Arbeitsgeschwindigkeit ist dabei die Tatsache, daß für jeden Satz scharfer Eingangswerte E (o ... n_{E}-1) die Gewichtungssignale nur einmal und nicht für uⁿE Kombinationen jeweils neu bestimmt werden.

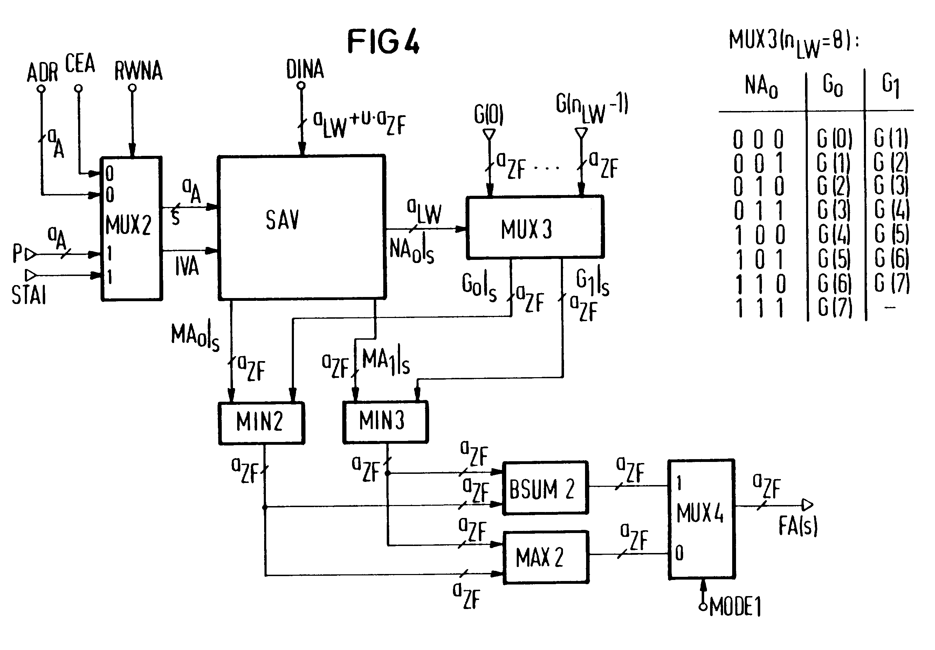

Figur 4 zeigt einen detaillierten Schaltungsaufbau einer erfindungsgemäßen Inferenzschaltung INF für einen maximalen Überlappungsgrad u = 2, die aus einem 1 aus 2-Multiplexer MUX2, einem Multiplexer MUX3, einem weiteren 1 aus 2 Multiplexer MUX4, aus u = 2 Minimumschaltungen MIN2 und MIN3, einer Schaltung BSUM2 zur Bildung einer begrenzten Summe, einer Maximumschaltung MAX2 und dem Speicher SAV für die Ausgangsvariablen. Der Speicher SAV ist dabei ähnlich optimiert wie der Speicher SEV für die Eingangsvariable, das heißt es werden die niedrigsten Nummern NA_{O} für die linguistischen Werte der Ausgangsvariablen mit einer Auflösung von a_{LW} Bit und jeweils u-Werte MA_{O} ... MAᵤ₋₁ mit einer Auslösung von a_{ZF} Bit pro Adresse gespeichert, wobei der maximale Überlappungsgrad u für die Eingangsvariable und die Ausgangsvariable im allgemeinen unterschiedlich sein kann. Sofern n_{A} Ausgangsvariable vorgesehen sind besitzt der Speicher SAV die Kapazität K_{A} = nₐ ∗ 2^{a}A ∗ (a_{LW} + u ∗ a_{ZF}) , wobei a_{LW} + u ∗ a_{ZF} Bit breite Worte adressierbar sind. Der Speicher SAV ist ebenfalls als Festwertspeicher oder als Schreib/Lesespeicher ausführbar. Sofern der Speicher SAV, wie in Figur 4 dargestellt, als Schreib/Lesespeicher ausgebildet ist sind, sofern ein extern zuführbares Schreib/Lesesignal RWNA gleich O ist, über den Multiplexer MUX2 extern zuführbare a_{A} Bit breite Adressen ADR auf die Adreßeingänge des Speichers SAV und ein extern zuführbares Übernahmesignal CEA auf einen Eingang IVA zur Bestätigung gültiger Eingangsdaten beim Speicher SAV durchschaltbar und extern zuführbare Dateneingangssignale DINA dem Speicher zuführbar. Ist das Schreib/Lesesignal RWNA gleich 1, so werden über den Multiplexer MUX2 in der Ablaufsteuerung CTRL erzeugte Adressierungssignale P an die Adreßeingänge des Speichers SAV und ein ebenfalls in der Ablaufsteuerung CTRL erzeugtes Inferenzstartsignal STAI auf den Eingang IVA zur Bestätigung gültiger Eingangssignale des Speichers SAV geschaltet. Das Adressierungssignal P wird im Lesemodus, also für RWNA gleich 1, ein Element s der insgesamt 2^{a}A-1 Elemente des Bereiches scharfer Werte der Ausgangsvariablen ausgewählt und für dieses Element bzw. an dieser Stelle die niedrigste Nummer NA₀|ₛ des linguistischen Wertes der Ausgangsvariablen, und für für u = 2 die Werte MA₀|ₛ und MA₁|ₛ der beiden sich überlappenden Zugehörigkeitsfunktionen der Ausgangsvariablen an der Stelle s auslesbar. Mit Hilfe des Multiplexers MUX3 werden abhängig von dem aus dem Speicher SAV ausgelesenen Signale für die Nummern NA₀|ₛ aus den Gewichtungssignalen G (0) ... G (n_{LW}-1) die an der Stelle s maximal u Gewichtungssignale G₀|ₛ und G₁|ₛ ausgewählt. In der Figur 4 ist ebenfalls eine Wertetabelle für den Multiplexer MUX3 für u = 2 und n_{LW} = 8 angegeben, wobei das Gewichtungssignal Gₓ = G ( (NA_{O})_{Dezimal} + x) für (NA_{O})_{Dezimal} + x kleiner n_{LW} gilt und G sonst den Wert O besitzt. Theoretisch ist ein maximaler Überlappungsgrad von u gleich n_{LW} möglich. Der Wert MA₀|ₛ und das Gewichtungssignal G₀|ₛ werden in der Minimumschaltung MIN2 und der Wert MA₁|ₛ wird mit dem Gewichtungssignal G₁|ₛ in der Minimumschaltung MIN3 unscharf UND-verknüpft, das heißt die jeweilige Zugehörigkeitsfunktion wird auf das Niveau des durch das jeweilige Gewichtungssignal festgelegten Wertes begrenzt. Das Ausgangssignal der Minimumschaltung MIN2 und das Ausgangssignal der Minimumschaltung MIN3 wird dann sowohl in der Maximumschaltung MAX2 als auch in der Schaltung BSUM2 zur Bildung einer begrenzten Summe unscharf ODER-verknüpft. Durch den Multiplexer MUX4 ist abhängig von einem extern zuführbaren Inferenzauswahlsignal MODE1 entweder der Ausgang der Maximumschaltung MAX2 oder der Ausgang der Schaltung BSUM2 auf einen Ausgang für eine unscharfe Vereinigungsmenge FA (s) durchschaltbar.

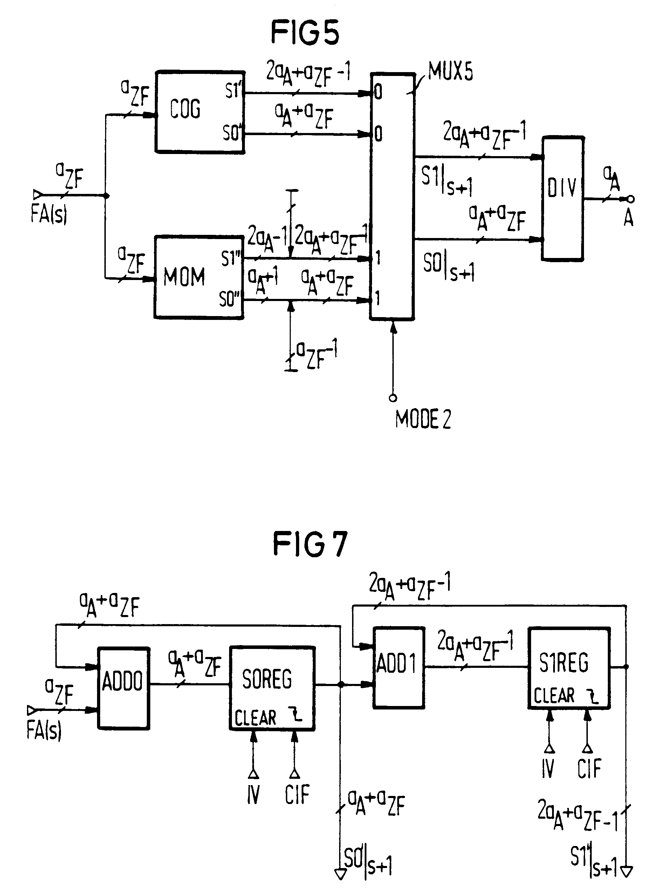

Figur 5 zeigt eine Detailschaltung einer erfindungsgemäßen Defuzzifikationsschaltung DFUZ, bei der ein a_{ZF} Bit breites Signal für die unscharfe Vereinigungsmenge FA (s) sowohl einer Summenbildungsschaltung COG für die Schwerpunktsberechnung (center of gravity) als auch einer Summenbildungsschaltung MOM für die Berechnung eines mittleren Maximalwertes (mean of maxima) zugeführt wird. Die Schaltung COG liefert dabei eine a_{A} + a_{ZF} Bit breite erste Summe SO' und eine zweite Summe S1' mit der Breite 2 ∗ a_{A} + a_{ZF} - 1 Bit. Die Schaltung MOM erzeugt eine a_{A}+1 Bit breite Summe S0'' und eine Summe S1'' mit der Breite 2 ∗ a_{A}-1 Bit. Mit Hilfe eines Multiplexers MUX5 sind abhängig von einem Defuzzifikationsauswahlsignal MODE2 entweder die Summen S0' und S1' der Schaltung COG oder die Summen S0'' und S1'' der Schaltung MOM in Form einer 2 ∗ a_{A} + a_{ZF}-1 Bit breiten Zwischensumme S1|ₛ₊₁ und einer Zwischensumme S0|ₛ₊₁ mit einer Bitbreite von a_{A} + a_{ZF} auf die beiden Eingänge eines Dividierers DIV schaltbar, an dessen Ausgang der scharfe Wert A der Ausgangsvariablen bildbar ist. Bei der Bildung des scharfen Wertes der Ausgangsvariablen wird mit der Stelle s = 2 a_{A}-1 begonnen und eine Verarbeitung der unscharfen Vereinigungsmenge FA (s) bis s = 0 fortgesetzt. Um diesen Dividierer DIV sowohl für die Summen S0' und S1' als auch für die Summen S0'' und S0'' verwenden zu können, werden bei der Summe S1'' die führenden a_{ZF} Bits und bei der Summe S0' die führenden a_{ZF}-1 Bits mit 0 belegt.

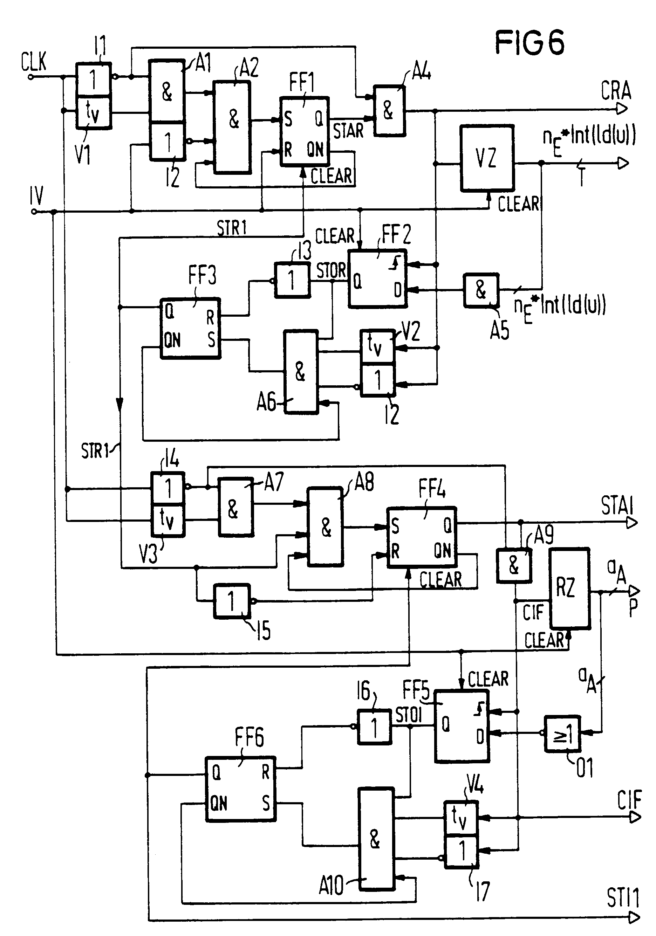

Eine Ablaufsteuerung CTRL eines erfindungsgemäßen Fuzzy Logic Controllers zur Erzeugung der Fuzzifikationssteuersignale T, des Regelauswertetakts CRA, des Inferenzstartsignals STAI, der Adressierungssignale P, des Inferenztaktsignals CIF und des Inferenzstopsignals STI1 aus dem Taktsignal CLK und dem Signal IV zur Bestätigung gültiger Eingangsdaten ist in Figur 6 dargestellt. Die Ablaufsteuerung CTRL besitzt einen n_{E} * Int (ld (u)) Bit breiten Vorwärtszähler VZ, einen a_{A} Bit breiten Rückwärtszähler RZ, Inverterschaltungen I1 ... I7, Verzögerungsschaltungen V1 ... V4 mit einer Verzögerungszeit t_{V}, UND-Schaltungen A1 ... A10, RS-Flipflops FF1, FF3, FF4 und FF6, D-Flipflops FF2, FF5 und eine NOR-Schaltung O1. Das Taktsignal CLK ist mit dem Eingang des Inverters I1, dem Eingang der Verzögerungsschaltung V1, dem Eingang des Inverters I4 und dem Eingang der Verzögerungsschaltung V3 verbunden. Das Signal IV zur Bestätigung gültiger Eingangsdaten ist mit dem Eingang des Inverters I2 dem Reseteingang des Flipflops FF1, dem Löscheingang des Flipflops FF2, dem Löscheingang des Vorwärtszählers VZ, dem Löscheingang des Flipflops FF5 und dem Löscheingang CLEAR des Rückwärtszählers RZ verbunden. Der Ausgang des Inverters I1 und der Ausgang der Verzögerungsschaltung V1 bilden die Eingänge der UND-Schaltung A1 deren Ausgang einen Eingang der UND-Schaltung A2 bildet. Einem zweiten Eingang der UND-Schaltung A2 wird das Ausgangssignal des Inverters I2 zugeführt und einem dritten Eingang der UND-Schaltung A2 wird das Signal des invertierten Ausgangs QN des Flipflops FF1 zurückgekoppelt. Das RS-Flipflop FF1 ist an seinem Setzeingang S mit dem Ausgang der UND-Schaltung A2 beschaltet und liefert an seinem Ausgang Q ein Regelauswertungsstartsignal STAR für einen Eingang der UND-Schaltung A4. Die UND-Schaltung A4 besitzt einen weiteren Eingang der mit dem Ausgang des Inverters I1 verbunden ist und deren Ausgang das Taktsignal CRA für die Regelauswertungsschaltung RA liefert. Das Taktsignal CRA dient als Eingangssignal für den Vorwärtszähler VZ, der an seinen n_{E} * Int (ld (u)) parallelen Ausgängen die Steuersignale T für die Fuzzifikationsschaltung FUZ liefert und deren Signale durch die UND-Schaltung A5 verknüpft sind, um beim Auftreten des höchsten im Vorwärtszähler VZ darstellbaren Wertes ein Eins-Signal für den Dateneingang D des Flipflops FF2 zu liefern. Darüber hinaus wird der Takt CRA dem Takteingang des Flipflops FF2, der Verzögerungsschaltung V2 und der Inverterschaltung I2 zugeführt. Der Ausgang Q des Flipflops FF2 führt ein unsynchronisiertes Regelauswertungssignal STOR und ist über einen Inverter I3 mit dem Rücksetzeingang R des Flipflops FF3 verbunden, dessen Ausgang Q ein Regelauswertungsstopsignal STR1 bildet und sowohl dem Löscheingang CLEAR des Flipflops FF1 als auch einem Eingang der UND-Schaltung A8 zugeführt ist. Das Signal am Setzeingang des Flipflops FF3 wird am Ausgang der UND-Schaltung A6 gebildet, deren erster Eingang mit dem Q-Ausgang des Flipflops FF2, deren zweiter Eingang mit dem Ausgang der Verzögerungsschaltung V2, deren dritter Eingang mit dem Ausgang des Inverters I2 und deren vierter Eingang mit einer Rückführung des negierten Ausgangs QN des Flipflops FF3 verbunden ist. Die Ausgangssignale des Inverters I4 und der Verzögerungsschaltung V3 werden durch die UND-Schaltung A7 verknüpft, die ausgangsseitig mit einem Eingang der UND-Schaltung A8 verbunden ist. Der Setzeingang S des Flipflops FF4 ist mit dem Ausgang der UND-Schaltung A8 und der Rücksetzeingang R dieses Flipflops wird über den Inverter I5 durch das Regelauswertungsstopsignal STR1 angesteuert. Am Ausgang Q des Flipflops FF4 liegt das Inferenzstartsignal STAI für die Inferenzschaltung INF, das gleichzeitig einem Eingang der UND-Schaltung A9 zugeführt wird. Der negierte Ausgang QN des Flipflops FF4 ist auf einen Eingang der UND-Schaltung A8 zurückgeführt. Die UND-Schaltung A9 besitzt einen weiteren Eingang der mit dem Ausgang der Inverterschaltung I4 verbunden ist und einen Ausgang der das Inferenztaktsignal CIF für die Defuzzifikationsschaltung DFUZ liefert. Das Inferenztaktsignal CIF wird dem Eingang des Rückwärtszählers RZ, dem Takteingang des Flipflops FF5, dem Eingang der Verzögerungsschaltung V4 und dem Eingang des Inverters I7 zugeführt. Der Rückwärtszähler RZ liefert an seinen a_{A} parallelen Ausgängen die Adressierungssignale P für die Inferenzschaltung INF. Die Adressierungssignale P sind durch die NOR-Schaltung 01 verknüpft, wodurch beim Auftreten des Minimalwertes des Rückwärtszählers RZ ein Eins-Signal dem Dateneingang D des Flipflops FF5 zuführbar ist. Der Rücksetzeingang R des Flipflops FF6 ist über den Inverter I6 mit dem Ausgang Q des Flipflops FF5 verbunden, der ein unsynchronisiertes Inferenzstopsignal STOI führt. Der Setzeingang S des Flipflops FF6 ist mit dem Ausgang der UND-Schaltung A10 beschaltet, deren erster Eingang mit dem Ausgang Q des Flipflops FF5, deren zweiter Eingang mit dem Ausgang der Verzögerungsschaltung V4, deren dritter Eingang mit dem Ausgang des Inverters I7 und deren vierter Eingang mit einer Rückführung des negierten Ausgangs QN des Flipflops FF6 verbunden ist. Der Ausgang Q des Flipflops FF6 liefert das Inferenzstopsignal STI1, das dem Löscheingang CLEAR des Flipflops FF4 und der Defuzzifikationsschaltung DFUZ zugeführt wird.

Nachdem beim Signal IV zur Bestätigung gültiger Eingangsdaten eine negative Flanke aufgetreten ist wird mit der nachfolgenden negativen Flanke des Taktsignals CLK das Startsignal STAR von 0 auf 1 gesetzt, wodurch das Taktsignal CLK in invertierter Form als Regelauswertungstaktsignal CRA der Regelauswerteschaltung RA zuführbar ist solange das Startsignal STAR sich auf Eins befindet. Der mit der steigenden Flanke des Signals IV gelöschte Vorwärtszähler VZ wird nun durch das Regelauswertungstaktsignal CRA bis zum Maximalwert hochgezählt, das heißt also bis alle parallelen Ausgänge eine Eins führen und somit alle uⁿE möglichen Kombinationen von Zugehörigkeitsfunktionen der Eingangsvariablen erzeugt wurden. Ist der Maximalwert beim Vorwärtszähler VZ erreicht, so stehen auch alle Gewichtungssignale G (0 ... n_{LW}-1) gültig zur Verfügung und das Startsignal STAR wird wieder von 1 auf 0 zurückgesetzt, wodurch das Regelauswertetaktsignal CRA nicht mehr das invertierte Taktsignal CLK erhält sondern konstant 0 ist. Nun wird das Taktsignal STR1 von 0 auf 1 gesetzt, wodurch durch die nächste negative Flanke des Taktsignals CLK das Inferenzstartsignal STAI ein Eins-Signal erhält und das Taktsignal CLK in invertierter Form als Inferenztaktsignal CIF an die Defuzzifikationsschaltung DFUZ abgegeben wird. Gleichzeitig wird der durch das Signal IV auf den Maximalwert gestellte Rückwärtszähler RZ durch das Inferenztaktsignal CIF bis auf den Minimalwert, das heißt alle a_{A} parallelen Ausgänge auf O heruntergezählt. Eine rückwärtszählende Adressierung und Verarbeitung von s = 2^{a}A-1 bis s = O führt zu einer besonders vorteilhaften Realisierungsmöglichkeit der Summenbildungsschaltung COG für die Schwerpunktsberechnung. Ist der Minimalwert s = O erreicht, ao wird mit der negativen Flanke des Inferenztaktsignals CIF das Inferenzstartsignal auf O rückgesetzt und das Inferenzstopsignal STI1 von O auf 1 gesetzt, wodurch das Inferenztaktsignal CIF dauernd Null-Signal erhält und der Rückwärtszähler gestoppt wird. Durch die Ablaufsteuerung CTRL wird unter anderem bewirkt, daß während ein jeweiliges Signal FA (s) für die unscharfe Vereinigungsmenge für eine Stelle s des Bereiches der scharfen Werte der Ausgangsvariablen in der Inferenzschaltung INF ermittelt wird, in der Defuzzifikationsschaltung DFUZ unscharfe Vereinigungsmengen FA (m) für bereits berechnete Stellen m = s + 1, ... , 2^{a}A-1 des Bereiches scharfer Werte der Ausgangsvariablen gleichzeitig weiterverarbeitet werden, dies könnte jedoch auch nacheinander geschehen.

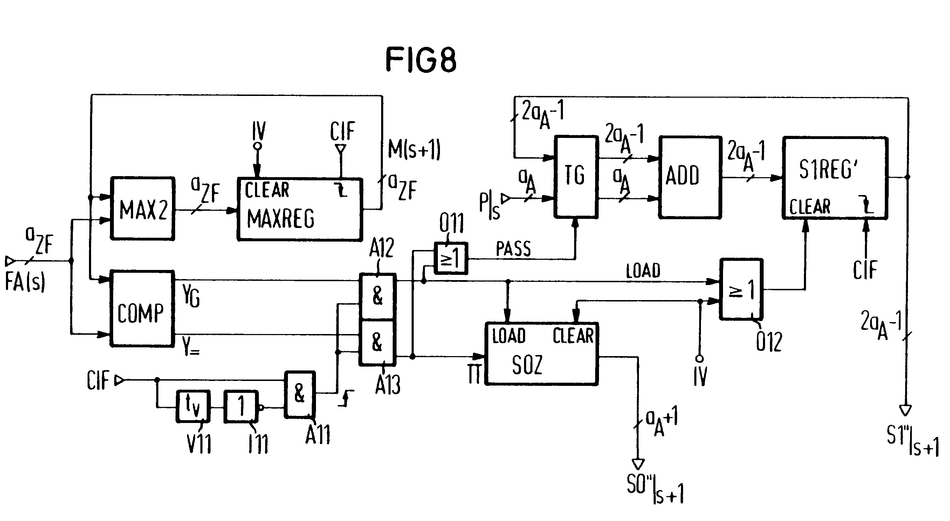

Die Summenbildungsschaltung COG kann beispielsweise, wie in Figur 7 gezeigt, aus einer Serienschaltung zweier Integratoren bestehen. Hierbei besitzt der erste Integrator eine Addiereinrichtung ADD0 und ein Summenregister SOREG und der zweite Integrator eine Addiereinrichtung ADD1 und ein Summenregister S1REG. Die Vereinigungsmenge FA (s) an der Stelle s ist mit einer Bitbreite von a_{ZF} der ersten Addiereinrichtung ADD0 zuführbar und der a_{A} + a_{ZF} Bit breite Ausgang ist mit einem entsprechend breiten Eingang des Summenregisters SOREG verbunden und am Ausgang des Summenregisters SOREG steht eine a_{A} + a_{ZF} Bit breite Zwischensumme SO'|ₛ₊₁ als möglicher Divisor für den Dividierers DIV und als Rekursionswert für die Addiereinrichtung ADD0 zur Verfügung. Die Zwischensumme SO'|ₛ₊₁ wird ebenfalls der Addiereinrichtung ADD1 des zweiten Integrators zugeführt, dessen 2 ∗ a_{A} + a_{ZF}-1 Bit breiter Ausgang mit dem ebenso breiten Summenregister S1REG verbunden ist, wobei das Summenregister S1REG an seinem 2 ∗ a_{A} + a_{ZF}-1 Bit breiten Ausgang eine zweite Zwischensumme S1'|ₛ₊₁ als möglichen Dividend für den Dividierer DIV und als Rekursionswert für die Addiereinheit ADD1 liefert. Die Register sind durch das Signal IV zur Bestätigung gültiger Eingangsdaten löschbar und werden mit Hilfe des Inferenztaktsignals CIF getaktet, da die Defuzzifikation hier erfindungsgemäß gleichzeitig mit der Inferenzbildung durchgeführt wird. Da die Verarbeitung mit dem Maximalwert s = 2^{a}A-1 beginnt und dieser Wert bei jedem Additionsschritt in der Addiereinrichtung ADD1 in der Zwischensumme S1'|ₛ₊₁ erneut enthalten ist, erfolgt eine Gewichtung mit dem Faktor s, der nächst kleinere Wert s = 2^{a}A-2 kommt einmal weniger in der Zwischensumme vor und wird deshalb nur mit dem Faktor s-1 gewichtet usw.

In Figur 8 ist eine vorteilhafte Ausgestaltung der Summenbildungsschaltung MOM für die Berechnung eines mittleren Maximums dargestellt, die eine Maximumschaltung MAX2 zum Vergleich zweier a_{ZF} Bit breiten Signale, ein Register MAXREG zur Speicherung des bisherigen Maximums M (s+1), einen Größer/Gleich-Komparator COMP, eine elektronische Schalteinheit TG, beispielsweise in Form von Transfergates, eine Addiereinrichtung ADD mit der Bitbreite 2 ∗ a_{A}-1, ein Summenregister S1REG', einen Zähler SOZ zum Zählen gleicher Maximalwerte, eine Verzögerungsschaltung V11, eine Inverterschaltung I11, UND-Schaltungen A11 ... A13 und eine ODER-Schaltung O11 besitzt. Die Vereinigungsmenge FA (s) ist hierbei sowohl einem Eingang der Maximumschaltung MAX2 und einem Eingang der Komparatorschaltung COMP zuführbar, der weitere Eingang der Maximumschaltung und der Komparatorschaltung ist jeweils mit dem Ausgang des Registers MAXREG verbunden. Der Eingang des Registers MAXREG ist mit dem Ausgang der Maximumschaltung MAX2 beschaltet dem Löscheingang CLEAR ist das Signal IV zur Bestätigung gültiger Eingangsdaten und dem Takteingang ist das Inferenztaktsignal CIF zuführbar, wodurch ausgelöst durch die negative Flanke des Signals CIF nach jedem Schritt für die jeweilige Stelle s das aktuelle Maximum in das Maximumregister eingeschrieben wird. Das Inferenztaktsignal CIF wird der UND-Schaltung A11 direkt und über die Verzögerungsschaltung V11 mit der Verzögerungszeit t_{V} und den Inverter I11 zugeführt, wodurch am Ausgang der UND-Schaltung A11, ausgelöst durch die jeweiligen positiven Flanken des Signals CIF, Impulse der Breite t_{V} bildbar sind und diese jeweils einem Eingang der UND-Schaltung A12 und A13 zuführbar sind. Ein Größer-Ausgangssignal Y_{G} ist dem zweiten Ausgang der UND-Schaltung A12 und ein Ausgangssignal Y₌ ist dem zweiten Eingang der UND-Schaltung A13 zuführbar. Der Ausgang der UND-Schaltung A12 ist mit einem Ladeeingang LOAD des Zählers SOZ und einem Eingang der ODER-Schaltung O12 verbunden und der Ausgang der UND-Schaltung A13 liefert Zählimpulse TT für den Zähler SOZ. Der Zähler SOZ besitzt einen Löscheingang CLEAR, der gemeinsam mit einem zweiten Eingang der ODER-Schaltung O12 das Signal IV zur Bestätigung gültiger Eingangssignale erhält und an dessen a_{A}+1 Bit breitem Ausgang eine weitere erste Zwischensumme S0''|ₛ₊₁ als möglichem Divisor für den Dividierer DIV zur Verfügung steht. Das Register S1REG' ist eingangsseitig mit dem 2 ∗ a_{A}-1 Bit breiten Ausgang des Addierers ADD beschaltet, besitzt einen Löscheingang CLEAR der mit dem Ausgang der ODER-Schaltung O12 verbunden ist, weist einen Takteingang auf, dem das Inferenztaktsignal CIF zuführbar ist und besitzt einen 2 ∗ a_{A}-1 Bit breiten Ausgang, der eine weitere zweite Zwischensumme S1''|ₛ₊₁ als möglichen Dividend für den Dividierer DIV liefert und die einem Eingang der Schaltung TG ADD zuführbar ist. Die Ausgangssignale der UND-Schaltungen A12 und A13 sind durch die ODER-Schaltung O11 verknüpft und bilden ein Durchschaltsignal PASS zur Ansteuerung der elektronischen Schalteinheit TG, die für PASS gleich 1 die Adressierungssignale P|ₛ für die Stelle s sowie S1''|ₛ₊₁ auf die beiden Eingänge auf der Addiereinrichtung ADD durchschaltet. Für den Fall, daß die unscharfe Vereinigungsmenge FA (s) gleich dem bisherigen Maximum M (s+1) ist, ergibt sich die neue Zwischensumme SO''|ₛ aus der bisherigen Zwischensumme SO''|ₛ₊₁ + 1 und die neue zweite Zwischensumme S1''|ₛ aus der bisherigen Zwischensumme S1''|ₛ₊₁ + P|ₛ . Dies hat zur Folge, daß bei mehreren gleichgroßen Maximalwerten diese Werte aufsummiert werden und mit Hilfe des Dividierers DIV durch die Anzahl dieser Werte geteilt werden und somit die Mitte des maximalen Plateaus ermittelt wird. Für den Fall, daß die Vereinigungsmenge FA (s) an der Stelle s größer als das bisherige Maximum M (s+1) ist, so wird der Zähler SOZ und damit die neue Zwischensumme SO''|ₛ gleich 1 gesetzt. Der neue Zwischensummenwert S1''|ₛ ergibt sich wie im ersten Fall, wobei allerdings der Inhalt des Registers S1REG' vorher gelöscht wurde und wodurch sich für den neuen Zwischensummenwert S1''|ₛ der Wert P|ₛ des Maximums ergibt. Im letzten Fall, bei dem die Vereinigungsmenge FA (s) kleiner als das bisherige Maximum M (s+1) ist, sind die neuen Zwischensummen jeweils die bisherigen Zwischensummen.

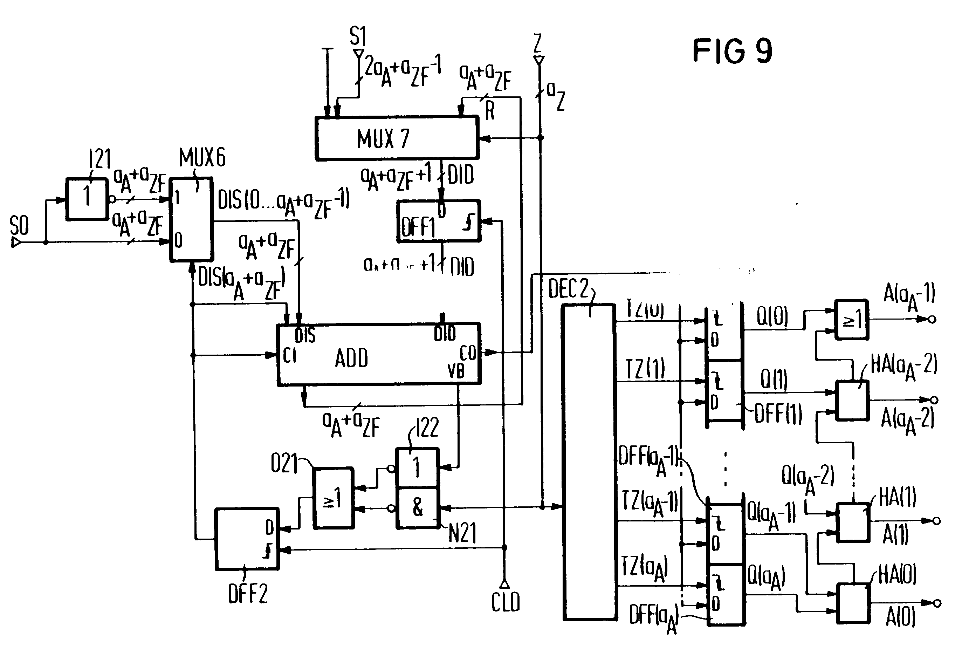

Als Divisionsschaltung DIV in der Defuzzifikationsschaltung DFUZ kann ein allgemein üblicher Dividierer Verwendung finden, der beispielsweise nach der "Methode ohne Rückstellen des Restes" ("Non Restoring"-Algorithmus) arbeitet. Da jedoch gewisse Bedingungen für den Divisior und den Dividend gelten, beispielsweise daß der Divisor kleiner ist als der Dividend, daß der Divisor und der Dividend beide positiv sind und daß das Ergebnis kleiner gleich a_{A} Bit aufweist, kann der Dividierer DIV etwas vereinfacht werden. In Figur 9 ist ein Ausführungsbeispiel eines vorteilhaften Dividierers mit einer Addiereinheit ADD_{D}, einem a_{A} + a_{ZF} Bit breiten 1 aus 2-Multiplexer MUX6, einem a_{A} + a_{ZF}+1 Bit breiten Multiplexer MUX7, einem Dekoder DEC2, der einen a_{Z} Bit breiten Eingang besitzt und mit dem Taktsignale TZ (0) ... TZ (a_{A}) bildbar sind, mit D-Flipflops DFF(0), DFF (1) ... DFF (a_{A}), Halbaddierern HA (O) ... HA (a_{A}-2), ODER-Schaltungen O21 und O22 einer NAND-Schaltung N21 mit a_{Z} Eingängen einer a_{A} + a_{ZF} bitbreiten Invertiereinheit I21 und einem Invertierer I22. Der Multiplexer MUX7 ist durch ein a_{Z} Bit breites Zählersignal Z ansteuerbar und es ergibt sich folgende Wertetabelle:

| | | | | | |
|---|---|---|---|---|---|
| Z (O.. a_{Z}-1) (Dezimal) | DID(a_{A}+a_{ZF}) | DID(a_{A}+a_{ZF}-1) | ... | DID(1) | DID(0) |
| 0 | 0 | S1(2∗a_{A}+a_{ZF}-2) | ... | S1(a_{A}) | S1(a_{A}-1) |
| 1 | R(a_{A}+a_{ZF}-1) | R(a_{A}+a_{ZF}-2) | ... | R(O) | S1(a_{A}-2) |
| . | . | . | ... | . | . |
| . | . | . | ... | . | . |
| . | . | . | ... | . | . |
| a_{A}-1 | R(a_{A}+a_{ZF}-1) | R(a_{A}+a_{ZF}-2) | ... | R(O) | S1(O) |
| a_{A} | R(a_{A}+a_{ZF}-1) | R(a_{A}+a_{ZF}-2) | ... | R(O) | O |

Der Dekoder DEC2 ist so aufgebaut, daß sich an einem Ausgang ein Taktsignal TZ (b) gleich 1 ergibt falls das Zählersignal gleich b_{dual} und sonst TZ(b) = 0 ist, wobei b = 0, 1, ... a_{A} ist. Ein Eingang der Addiereinheit ADD_{D} ist mit dem Ausgang des a_{A} + a_{ZF}+1 Bit breiten Ausgangs des Flipflops DFF1 beschaltet, wodurch der Addierschaltung der Dividend DID zuführbar ist. Das D-Flipflop DFF1 erhält an seinem Dateneingang D die Ausgangssignale des Multiplexers MUX7 und wird durch eine ansteigende Flanke eines Dividierertaktsignals CLD einer später noch näher erläuterten Dividiererablaufsteuerung getaktet. Die a_{A} + a_{ZF} Bit breite Zwischensumme SO wird, sofern das Steuersignal des Multiplexers MUX6 gleich Null ist, direkt und, sofern das Steuersignal des Multiplexers MUX6 gleich Eins ist, über die Invertereinheit I21 als Divisoranteil DIS (O ...a_{A} + a_{ZF}-1) dem weiteren Summationseingang des Addierers ADD_{D} zugeführt. Die Addierschaltung ADD_{D} besitzt einen a_{A} + a_{ZF} Bit breiten Ausgang für den Divisionsrest R, der eingangsseitig dem Multiplexer MUX7 zuführbar ist und einen Ausgang VB für das Vorzeichenbit, das über den Inverter I22 einem Eingang der ODER-Schaltung O21 zuführbar ist. Das Zählersignal wird durch die NAND-Schaltung N21 verknüpft und dem zweiten Eingang der ODER-Schaltung O21 zugeführt. Der Ausgang der ODER-Schaltung O21 ist mit dem Dateneingang D der Flipflopschaltung DFF2 verbunden, deren Takteingang mit dem Dividierertaktsignal CLD beschaltet ist und deren Ausgang mit einem Übertragseingang CI der Addiereinheit ADD_{D} verbunden ist, das Steuersignal für den Multiplexer MUX6 und das MSBDIS (a_{A} + a_{ZF}) des Divisors für die Addierschaltung ADD_{D} liefert. Der Übertragsausgang C0 der Addiererschaltung ADD_{D} ist gleichzeitig den Dateneingängen D der D-Flipflops DFF (O) ... DFF (a_{A}) zuführbar und das Flipflop DFF (O) wird durch eine negative Flanke des Taktsignals TZ (O) getaktet. Entsprechendes gilt für die weiteren Flipflops bis hin zum Flipflop DFF (a_{A}) das durch die negative Flanke des Taktsignals TZ (a_{A}) getaktet wird. Die Ausgänge Q (O) ... Q (a_{A}) der Flipflops DFF (O) ... DFF (a_{A}) werden einem Eingang der ODER-Schaltung O22 und den Summeneingängen der Halbaddierer HA (O) ... HA (a_{A}-2) zugeleitet und der Übertragsausgang des Halbaddierers HA (O) wird im zweiten Eingang des Halbaddierers HA (1) zugeführt und so weiter bis der Übertragsausgang des Halbaddierers HA (a_{A}-2) das Signal für den zweiten Eingang der ODER-Schaltung O22 liefert. Das Ausgangssignal der ODER-Schaltung O22 stellt dabei das MSB A (a_{A}-1) des scharfen Wertes A der Ausgangsvariablen dar. Entsprechendes gilt für die Ausgänge der Halbaddierer, wobei das LSB A (O) des scharfen Wertes A der Ausgangsvariablen am Ausgang des Halbaddierers HA (O) abgreifbar ist.

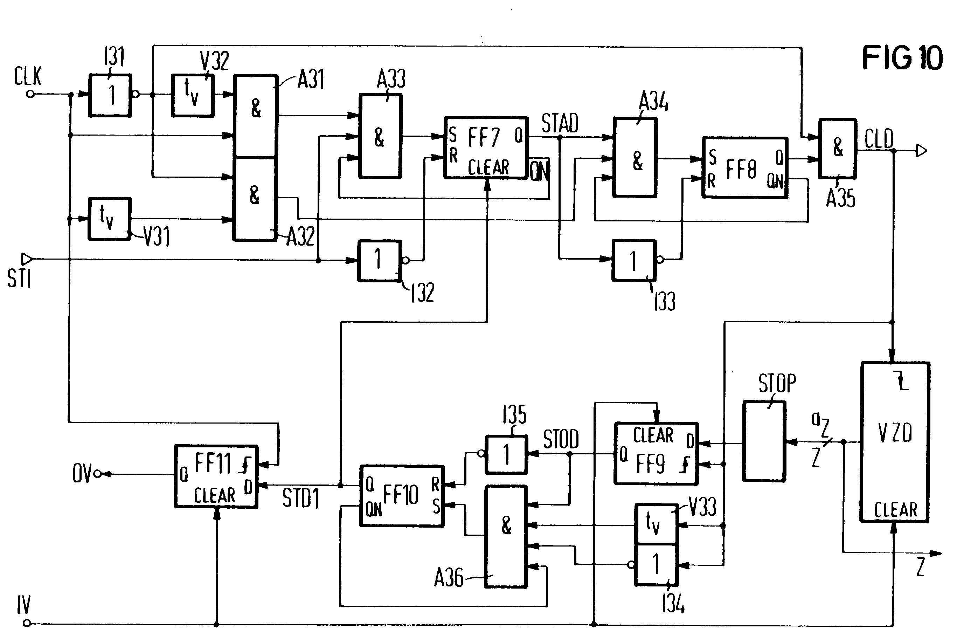

In Figur 10 ist eine Ablaufsteuerung für den in Figur 9 gezeigten Dividierer dargestellt, die aus dem Taktsignal CLK, dem Signal IV für gültige Eingangsdaten und dem Inferenzstopsignal STI1 das Dividierertaktsignal CLD, das a_{Z} Bit breite Zählersignal Z, und ein extern verfügbares Signal OV zur Bestätigung gültiger Ausgangsdaten erzeugt. Die Ablaufsteuerung von Figur 10 besitzt einen Vorwärtszähler VZD mit der Bitbreite a_{Z} = Int (ld(a_{A}+1)) , RS Flipflops FF7, FF8 und FF10, D-Flipflops FF9 und FF11, eine Stopschaltung STOP, UND-Gatter A31 ... A36, Verzögerungsschaltungen V31 ... V33 mit der Verzögerungszeit t_{V} und Inverter I31 ... I35. Das Taktsignal CLK ist über den Inverter I31 einem Eingang der UND-Schaltung A35, dem Eingang der Verzögerungsschaltung V32 und einem Eingang der UND-Schaltung A32, über die Verzögerungsschaltung V31 dem zweiten Eingang der UND-Schaltung A32 und direkt sowohl dem zweiten Eingang der UND-Schaltung A31 als auch dem Takteingang des Flipflops FF11 zuführbar. Der Ausgang der UND-Schaltung A31 ist mit einem Eingang der UND-Schaltung A33 und der Ausgang der UND-Schaltung A32 ist mit einem Eingang der UND-Schaltung A34 verbunden. Das Inferenzstopsignal STI1 ist einem weiteren Eingang der UND-Schaltung A33 direkt und dem Rücksetzeingang R des Flipflops FF7 über den Inverter I32 zuführbar. Der Ausgang der UND-Schaltung A33 ist mit dem Setzeingang S des Flipflops FF7 verbunden, dessen invertierter Ausgang QN auf den dritten Eingang der UND-Schaltung A33 zurückgeführt ist. Ein Divisionsstartsignal STAD liegt am Ausgang Q des Flipflops FF7 an und wird einem weiteren Eingang der UND-Schaltung A34 direkt und dem Rücksetzeingang R des Flipflops FF8 über einem Inverter I33 zugeführt. Das Flipflop FF8 besitzt einen Setzeingang S der mit dem Ausgang des UND-Gatters A34 einen Ausgang Q der mit dem zweiten Eingang der UND-Schaltung A35 und einen invertierten Ausgang QN der mit dem dritten Eingang der UND-Schaltung A34 beschaltet ist. Am Ausgang der UND-Schaltung A35 liegt das Dividierertaktsignal CLD an, das dem Dividierer, dem Zählereingang des Vorwärtszählers VZD, dem Takteingang des Flipflops FF9, der Verzögerungsschaltung V33 und dem Inverter I34 zuführbar ist, wobei die Flipflops DFF1 und DFF2 im Dividierer auf eine positive Flanke, das Flipflop FF9 ebenfalls auf eine positive Flanke und der Vorwärtszähler VZD der Ablaufsteuerung des Dividierers auf eine negative Flanke des Signals CLD ansprechen. Das extern zuführbare Signal IV zur Bestätigung gültiger Eingangsdaten ist mit den Löscheingängen CLEAR des Flipflops FF11, FF9 und des Vorwärtszählers VZD verbunden. Der Vorwärtszähler VZD besitzt einen a_{Z} = Int (ld (a_{A}+1)) Bit breiten Ausgang, an dem die Zählersignale Z für die Dividiererschaltung von Figur 9 und für die Stopschaltung STOP abgreifbar sind. Für ein realistisches Beispiel mit a_{A} = 8 bzw. a_{Z} = 4 besteht die Schaltung STOP aus einem ODER-Gatter mit einem invertierenden Eingang für das MSB Z(3) von Z. Das Flipflop FF9 besitzt einen Dateneingang D der mit dem Ausgang der Stopschaltung und einen Ausgang Q, der ein Divisionsstopsignal STOD führt und dieses über den Inverter I35 dem Rücksetzeingang R des Flipflops FF9 zuführt. Die UND-Schaltung A36 besitzt einen ersten Eingang der mit dem Ausgang Q des Flipflops FF9, einen zweiten Eingang der mit dem Ausgang der Verzögerungsschaltung V33, einen dritten Eingang der mit dem Ausgang der Inverterschaltung I34 und einen vierten Eingang der mit dem invertierten Eingang QN des Flipflops FF10 und einen Ausgang der mit dem Setzeingang S des Flipflops FF10 beschaltet ist. Am Ausgang Q des Flipflops FF10 liegt ein Defuzzifikationsstopsignal STD1 das dem Dateneingang D des Flipflops FF11 und dem Löscheingang CLEAR des Flipflops FF7 zuleitbar ist. Am Ausgang Q des Flipflops FF11 ist das extern verfügbare Signal OV zur Bestätigung gültiger Ausgangsdaten abgreifbar. Sobald das Inferenzstopsignal STI1 gleich 1 ist wird mit der positiven Flanke des Taktsignals CLK das Divisionsstartsignal STAD auf 1 gesetzt und der Dividierertakt CLD entspricht dem invertierten Takt CLK. Ist die Stopbedingung der Schaltung STOP erfüllt, so wird mit der positiven Flanke des Dividierertaktes CLD das Dividiererstopsignal STOD gleich 1 gesetzt, mit der anschließenden negativen Flanke des Dividierertaktsignals CLD das Defuzzifikationsstopsignal STD1 ebenfalls auf 1 gesetzt und das Dividiererstartsignal STAD auf 0 rückgesetzt. Nach einer erneuten positiven Flanke des Taktsignals CLK wird, nach dem das Defuzzifikationsstopsignal STD1 ein Eins-Signal erhalten hat, das Signal OV zur Bestätigung gültiger Ausgangsdaten ebenfalls auf 1 gesetzt.

Der erfindungsgemäße FLC kann sowohl für sich aufgebaut sein oder aber einen Bestandteil eines ohne den FLC handelsüblichen Mikrocontrollers darstellen. Die Speicher SEV und SAV können hierbei auf dem Chip des Mikrocontrollers aber auch off-chip realisiert werden.

## Patentansprüche

1. Fuzzy Logic Controller mit einer Fuzzifikationsschaltung (FUZ) in der, unter Mitwirkung eines Speichers (SEV) für die Eingangsvariablen, aus scharfen extern zuführbaren Werten von n_{E} Eingangsvariablen, uⁿE Kombinationen von Nummern (NEᵢ(O ... n_{E}-1)) für durch die scharfen Werte betroffene linguistische Werte der Eingangsvariablen und Werte (ME; (O ... n_{E}-1)) der Zugehörigkeitsfunktionen der jeweilig betroffenen linguistischen Werte der Eingangsvariablen erzeugbar sind, wobei sich jeweils maximal u Zugehörigkeitsfunktionen überlappen und dadurch maximal u linguistische Werte gleichzeitig durch einen scharfen Wert der Eingangsvariablen betroffen sind,
mit einem Regeldekoder (RDEC) in dem, gemäß eines in ihm gespeicherten linguistischen Protokolls, aus den uⁿE Kombinationen von Nummern, Signale zur Festlegung von Nummern (NA) der von einer jeweiligen Regel des linguistischen Protokolls betroffenen linguistischen Werte der Ausgangsvariablen bildbar sind,
mit einer Regelauswerteschaltung (RA) in der, unter Mithilfe von mindestens einer Schaltung (BSUM1, MAX1) zur Bildung einer unscharfen Verknüpfung aus den Signalen zur Festlegung von Nummern (NA) der linguistischen Werte der Ausgangsvariablen und den Werten (ME) der Zugehörigkeitsfunktionen der jeweiligen linguistischen Werte der Ausgangsvariablen, für jeden von n_{LW} linguistischen Werten der Ausgangsvariablen ein Gewichtungssignal (G (O ... n_{LW}-1)) erzeugbar ist,
mit einer Inferenzschaltung (INF) in der, unter Mitwirkung eines Speichers (SAV) und mindestens einer weiteren Schaltung (BSUM2, MAX2) zur Bildung einer unscharfen Verknüpfung, aus den Gewichtungssignalen (G (O ... n_{LW}-1)), für alle Stellen (s) des Bereiches scharfer Werte der Ausgangsvariablen Signale (FA (s)) für unscharfe Vereinigungsmengen an den jeweiligen Stellen (s) bildbar sind und
mit einer Defuzzifikationsschaltung (DFUZ) in der, unter Mitwirkung von mindestens einer Auswerteschaltung (COG, MOM), aus den Signalen (FA (s)) für die unscharfen Vereinigungsmengen aller Stellen (s) des Bereiches scharfer Werte der Ausgangsvariablen, scharfe extern verfügbare Werte (A) der Ausgangsvariablen erzeugbar sind,
**dadurch gekennzeichnet,**
daß eine Ablaufsteuerung (CTRL) vorgesehen ist, die bewirkt, daß nach den uⁿE Kombinationen von Nummern die Gewichtungssignale für die n_{LW} linguistischen Werte der Ausgangsvariablen für jeden Satz von scharfen Werten der n_{E} Eingangsvariablen lediglich einmalig ermittelt werden und diese einmalig ermittelten Gewichtungssignale in der Inferenzschaltung für alle Stellen (s) des Bereiches scharfer Werte der Ausgangsvariablen verwendet werden.

2. Fuzzy Logic Controller nach Anspruch 1, **dadurch gekennzeichnet,** daß im Regeldekoder (RDEC) zusätzlich Auswahlsignale (SM) zur Festlegung, der von einer jeweiligen Regel betroffenen Eingangsvariablen bildbar sind und daß diese Auswahlsignale der Regelauswerteschaltung (RA) zuführbar sind.

3. Fuzzy Logic Controller nach Anspruch 1 oder 2, **dadurch gekennzeichnet,** daß die Ablaufsteuerung ferner bewirkt, daß während ein jeweiliges Signal (FA (s)) für die unscharfe Vereinigungsmenge für eine Stelle (s) des Bereiches der scharfen Werte der Ausgangsvariablen in der Inferenzschaltung (INF) ermittelt wird, in der Defuzzifikationsschaltung (DFUZ) unscharfe Vereinigungsmengen (FA (m)) für bereits berechnete Stellen (m = s+1, ..., 2^{a}A-1) des Bereiches scharfer Werte der Ausgangsvariablen gleichzeitig weiterverarbeitet werden.

4. Fuzzy Logic Controller nach einem der Ansprüche 1 bis 4, **dadurch gekennzeichnet,** daß die Regelauswerteschaltung (RA) sowohl eine Schaltung (BSUM1) zur Bildung einer begrenzten Summe als auch eine Maximumschaltung (MAX1) besitzt, die als erste und zweite Schaltung zur Bildung einer unscharfen Verknüpfung dienen, und daß alternativ eine der beiden Schaltungen, abhängig von einem extern zuführbaren Regelauswertungsauswahlsignal (MODEO), zur Bildung der Gewichtungssignale (G) nutzbar ist.

5. Fuzzy Logic Controller nach Anspruch 1 bis 5, **dadurch gekennzeichnet,** daß die Inferenzschaltung (INF) sowohl eine Schaltung (BSUM2) zur Bildung einer begrenzten Summe als auch eine Maximumschaltung (MAX2) besitzt, die als erste und zweite weitere Schaltung zur Bildung einer unscharfen Verknüpfung dienen, und daß alternativ eine der beiden Schaltungen, abhängig von einem extern zuführbaren Inferenzauswahlsignal (MODE1), zur Bildung der Signale (FA (s)) für die unscharfen Vereinigungsmenge an den jeweiligen Stellen (s) nutzbar ist.

6. Fuzzy Logic Controller nach Anspruch 1 bis 5, **dadurch gekennzeichnet,** daß die Defuzzifikationsschaltung (DFUZ) sowohl eine Schaltung (COG) zur Berechnung des Schwerpunkts als auch eine Schaltung (MOM) zur Berechnung des mittleren Maximums besitzt, die als erste und zweite Auswerteschaltung dienen, und daß alternativ eine der beiden Auswerteschaltungen, abhängig von einem extern zuführbaren Defuzzifikationsauswahlsignal (MODE2), zur Bildung der scharfen Werte (A) der Ausgangsvariablen nutzbar ist.

7. Fuzzy Logic Controller nach einem der Ansprüche 1 bis 6, **dadurch gekennzeichnet,** daß der Regeldekoder als programmierbare Logik ausgeführt ist.

8. Fuzzy Logic Controller nach einem der Ansprüche 1 bis 7, **dadurch gekennzeichnet,** daß der Speicher (SEV) für die Eingangsvariablen und/oder der Speicher (SAV) für die Ausgangsvariablen als Schreib/Lesespeicher ausgeführt ist.

9. Fuzzy Logic Controller nach einem der vorhergehenden Ansprüche, **dadurch gekennzeichnet,** daß der Fuzzy Logic Controller zusammen mit seinem Speicher (SEV) für die Eingangsvariablen und seinem Speicher (SAV) für die Ausgangsvariablen einen Bestandteil eines konventionellen Mikrocontrollers darstellt.

## Claims

1. Fuzzy logic controller with a fuzzification circuit (FUZ) in which, with the aid of a memory (SEV) for the input variables, it is possible to generate from sharp values, which can be fed externally, of n_{E} input variables uⁿE combinations of numbers (NEᵢ(0 ... n_{E}-1)) for linguistic values, affected by the sharp values, of the input variables and values (ME; (0 ... n_{E}-1)) of the membership functions of the respectively affected linguistic values of the input variables, in each case at most u membership functions overlapping one another and thereby a maximum of u linguistic values simultaneously being affected by a sharp value of the input variables, having a rule decoder (RDEC) in which, in accordance with a linguistic protocol stored in it, it is possible to form from the uⁿE combinations of numbers signals for determining numbers (NA) of the linguistic values, affected by a respective rule of the linguistic protocol, of the output variables,
having a rule evaluation circuit (RA) in which it is possible to generate a weighting signal (G (0 ... n_{LW}-1)) for each of n_{LW} linguistic values of the output variables from the signals for determining numbers (NA) of the linguistic values of the output variables and the values (ME) of the membership functions of the respective linguistic values of the output variables with the aid of at least one circuit (BSUM1, MAX1) for forming a fuzzy combination,
having an inference circuit (INF) in which it is possible, from the weighting signals (G (0 ... n_{LW}-1)), to form for all locations (s) of the region of sharp values of the output variables signals (FA (s)) for fuzzy union sets at the respective locations (s) with the aid of the memory (SAV) and at least one further circuit (BSUM2, MAX2) for forming a fuzzy combination, and
having a defuzzification circuit (DFUZ) in which, with the aid of at least one evaluation circuit (COG, MOM), it is possible to generate sharp externally available values (A) of the output variables from the signals (FA (s)) for the fuzzy union sets of all the locations (s) of the region of sharp values of the output variables, characterized in that a sequence control system (CTRL) is provided which has the effect that, after the uⁿE combinations of numbers, the weighting signals for the n_{LW} linguistic values of the output variables are determined only once for each set of sharp values of the n_{E} input variables, and these weighting signals determined once are used in the inference circuit for all locations (s) of the region of sharp values of the output variables.

2. Fuzzy logic controller according to Claim 1, characterized in that it is possible in addition to form in the rule decoder (RDEC) selection signals (SM) for determining the input variables affected by a respective rule, and in that these selection signals can be fed to the rule evaluation circuit (RA).

3. Fuzzy logic controller according to Claim 1 or 2, characterized in that the sequence control system further has the effect that fuzzy union sets (FA (m)) for already calculated locations (m = s+1, ..., 2^{a}A-1) on the region of sharp values of the output variables are further processed simultaneously in the defuzzification circuit (DFUZ) while a respective signal (FA (s)) for the fuzzy union set for a location (s) of the region of the sharp values of the output variables is determined in the inference circuit (INF).

4. Fuzzy logic controller according to one of Claims 1 to 4, characterized in that the rule evaluation circuit (RA) has both a circuit (BSUM1) for forming a limited sum and a maximum circuit (MAX1), which serve as first and second circuit for forming a fuzzy combination, and in that, alternatively, one of the two circuits can be used to form the weighting signal (G) as a function of a rule evaluation selection signal (MODE0) which can be fed externally.

5. Fuzzy logic controller according to Claims 1 to 5, characterized in that the inference circuit (INF) has both a circuit (BSUM2) for forming a limited sum and a maximum circuit (MAX2), which serve as first and second further circuit for forming a fuzzy combination, and in that, alternatively, one of the two circuits can be used to form the signals (FA (s)) for the fuzzy union sets at the respective locations (s) as a function of an inference selection signal (MODE1) which can be fed externally.

6. Fuzzy logic controller according to Claims 1 to 5, characterized in that the defuzzification circuit (DFUZ) has both a circuit (COG) for calculating the centroid and a circuit (MOM) for calculating the mean maximum, which serve as first and second evaluation circuit, and in that, alternatively, one of the two evaluation circuits can be used to form the sharp values (A) of the output variables as a function of a defuzzification selection signal (MODE2) which can be fed externally.

7. Fuzzy logic controller according to one of Claims 1 to 6, characterized in that the rule decoder is designed as a programmable logic system.

8. Fuzzy logic controller according to one of Claims 1 to 7, characterized in that the memory (SEV) for the input variables and/or the memory (SAV) for the output variables is designed as a read/write memory.

9. Fuzzy logic controller according to one of the preceding claims, characterized in that the fuzzy logic controller together with its memory (SEV) for the input variables and its memory (SAV) for the output variables represents a component of a conventional microcontroller.

## Revendications

1. Contrôleur en logique floue avec un circuit de fuzzification (FUZ), dans lequel peuvent être générées, avec l'aide d'une mémoire (SEV) pour les variables d'entrée, à partir de valeurs précises pouvant être envoyées de l'extérieur de n_{E} variables d'entrée, uⁿE combinaisons de numéros (NE_{I} (0 ... n_{E}-1) pour des valeurs linguistiques des variables d'entrée, qui sont concernées par les valeurs précises, et des valeurs (ME ; (0 ... n_{E}-1) des fonctions d'appartenance des valeurs linguistiques respectivement concernées des variables d'entrée, au maximum u fonctions d'appartenance se recouvrant à chaque fois et, par conséquent, au maximum u valeurs linguistiques étant en même temps concernées par une valeur précise des variables d'entrée,
avec un décodeur de règles (RDEC), dans lequel peuvent être générés, selon un protocole linguistique chargé dans sa mémoire, à partir des uⁿE combinaisons de numéros, des signaux permettant de définir des numéros (NA) des valeurs linguistiques des variables de sortie, qu sont concernées par une règle respective du protocole linguistique,
avec un circuit d'analyse des règles (RA), dans lequel peut être généré, avec l'aide d'au moins un circuit (BSUM1, MAX1) permettant de créer une liaison floue, à partir des signaux permettant de définir des numéros (NA) des valeurs linguistiques des variables de sortie et des valeurs (ME) des fonctions d'appartenance des valeurs linguistiques respectives des variables de sortie, un signal de pondération (G (0 ... n_{LW}-1) ) pour chacune de n_{LW} valeurs linguistiques des variables de sortie,
avec un circuit d'inférence (INF), dans lequel peuvent être générés, avec l'aide d'une mémoire (SAV) et d'au moins un autre circuit (BSUM2, MAX2) permettant de créer une liaison floue, à partir des signaux de pondération (G (0 ... n_{LW}-1) ), pour tous les endroits (s) de la zone des valeurs précises des variables de sortie, des signaux (FA (s) ) pour des sommes d'ensemble floues aux endroits (s) respectifs, et
avec un circuit de défuzzification (DFUZ), dans lequel peuvent être générées, avec l'aide d'au moins un circuit d'analyse (COG, MOM), à partir des signaux (FA (s) ) pour les sommes d'ensemble floues de tous les endroits (s) de la zone des valeurs précises des variables de sortie, des valeurs précises (A) des variables de sortie, qui sont disponibles à l'extérieur,
caractérisé en ce qu'une commande de contrôle (CTRL) est prévue ayant pour effet de déterminer, après les uⁿE combinaisons de numéros, les signaux de pondération pour les n_{LW} valeurs linguistiques des variables de sortie, seulement une fois pour chaque groupe de valeurs précises des n_{E} variables d'entrée et d'utiliser ces signaux de pondération déterminés une fois, dans le circuit d'inférence, pour tous les endroits (s) de la zone des valeurs précises des variables de sortie.

2. Contrôleur en logique floue selon la revendication 1, caractérisé en ce que des signaux de sélection (SM) permettant de définir les variables d'entrée concernées par une règle respective peuvent également être générés dans le décodeur de règles (RDEC) et en ce que ces signaux de sélection peuvent être envoyés au circuit d'analyse des règles (RA).

3. Contrôleur en logique floue selon la revendication 1 ou 2, caractérisé en ce que la commande de contrôle a en outre, pendant la détermination dans le circuit d'inférence (INF) d'un signal (FA (s) ) pour la somme d'ensemble floue pour un endroit (s) de la zone des valeurs précises des variables de sortie, pour effet de continuer à traiter en même temps, dans le circuit de défuzzification (DFUZ), des sommes d'ensemble floues (FA (m) ) pour des endroits déjà calculés (m = s+1, ... 2^{a}A-1) de la zone des valeurs précises des variables de sortie.

4. Contrôleur en logique floue selon l'une des revendications 1 à 4, caractérisé en ce que le circuit d'analyse des règles (RA) possède à la fois un circuit (BSUM1) permettant de calculer une somme limitée et un circuit à maximum (MAX1), qui servent de premier et de deuxième circuit pour créer une liaison floue, et en ce qu'en fonction d'un signal de sélection d'analyse des règles (MODE0) pouvant être envoyé de l'extérieur, l'un ou l'autre des deux circuits peut être utilisé pour générer les signaux de pondération (G).

5. Contrôleur en logique floue selon l'une des revendications 1 à 5, caractérisé en ce que le circuit d'inférence (INF) possède à la fois un circuit (BSUM2) permettant de calculer une somme limitée et un circuit à maximum (MAX2) qui servent de premier et de deuxième circuit supplémentaire pour créer une liaison floue, et en ce qu'en fonction d'un signal de sélection d'inférence (MODE1) pouvant être envoyé de l'extérieur, l'un ou l'autre des deux circuits peut être utilisé pour générer aux endroits respectifs (s) les signaux (FA (s) ) pour les sommes d'ensemble floues.

6. Contrôleur en logique floue selon l'une des revendications 1 à 5, caractérisé en ce que le circuit de défuzzification (DFUZ) possède à la fois un circuit (COG) permettant de calculer le centre de gravité et un circuit (MOM) permettant de calculer le maximum moyen, qui servent de premier et de deuxième circuit d'analyse, et en ce qu'en fonction d'un signal de sélection de défuzzification (MODE2) pouvant être envoyé de l'extérieur, l'un ou l'autre des deux circuits d'analyse peut être utilisé pour créer les valeurs précises (A) des variables de sortie.

7. Contrôleur en logique floue selon l'une des revendications 1 à 6, caractérisé en ce que le décodeur de règles est réalisé sous forme de logique programmable.

8. Contrôleur en logique floue selon l'une des revendications 1 à 7, caractérisé en ce que la mémoire (SEV) pour les variables d'entrée et/ou la mémoire (SAV) pour les variables de sortie est réalisée sous forme de mémoire à écriture-lecture.

9. Contrôleur en logique floue selon l'une des revendications précédentes, caractérisé en ce que le contrôleur en logique floue, avec sa mémoire (SEV) pour les variables d'entrée et sa mémoire (SAV) pour les variables de sortie, représente une composante d'un microcontrôleur conventionnel.
